# EUROPEAN PATENT APPLICATION

(11) **EP 4 817 785 A1**
(43) Date of publication of application: **07.10.2026**
(21) Application number: 25216721.8
(22) Date of filing: 18.11.2025
(51) Int. Cl.: B23K 26/53, B23K 26/08, B23K 26/0622

(54) **METHOD AND EQUIPMENT FOR GENERATING WAFERS BY LASER SLICING OF SIC INGOTS**

(30) Priority: 10.12.2024 CN 202411803517
(71) Applicant: Westlake Instruments (Hangzhou) Technology Co., Ltd., Hangzhou, Zhejiang 310024 (CN)
(72) Inventor: Liu, Dongli, Hangzhou, Zhejiang, 310024 (CN); Liu, Fengjiang, Hangzhou, Zhejiang, 310024 (CN); Cao, Simin, Hangzhou, Zhejiang, 310024 (CN); Zhu, Jiakai, Hangzhou, Zhejiang, 310024 (CN); Yu, Xiaoying, Hangzhou, Zhejiang, 310024 (CN)
(74) Representative: Izquierdo Blanco, Maria Alicia

(57) **Abstract**

The present disclosure relates to a wafer generation method, in particular to a method and equipment for generating wafers by laser slicing of SiC ingots. This method improves formation of modified layers and propagation paths of cracks, reduces residual wafer defects, and enhances production yield by adjusting a rotation angle of a SiC ingot and a scanning direction of a laser beam so that the scanning direction of the laser beam deviates from a primary flat within a specific angular range.

## Description

### TECHNICAL FIELD

The present disclosure relates to a wafer generation method, in particular to a method and equipment for generating wafers by laser slicing of SiC ingots.

### BACKGROUND

In the manufacturing of modem semiconductor and optoelectronic devices, SiC (silicon carbide) wafers have become important materials due to their superior physical properties, such as high thermal conductivity, high electron mobility, and high temperature resistance. However, conventional SiC wafer slicing methods mainly rely on wire sawing technology, which exhibits significant inefficiency and material waste when processing high-hardness SiC materials.

Wire sawing technology typically uses metal wires with diameters ranging from 100 to 300 µm to cut SiC ingots by means of a sawing motion. This method not only requires long processing times, but also results in material waste as high as 70% to 80%. Especially for SiC ingots with high Mohs hardness, the time-consuming problem in the slicing process is even more prominent, thereby limiting the possibility of large-scale production and application.

In recent years, laser processing technology has been introduced into the slicing process of SiC wafers. By adjusting the power, wavelength, and focal position of the laser, modified layers and cracks can be formed inside the SiC ingot, thereby achieving efficient wafer slicing. Compared with conventional mechanical slicing methods, laser processing has the advantages of non-contact operation, high precision, and superior controllability. The formation of modified layers inside the SiC ingot facilitates easier wafer slicing along a predetermined dicing path. For example, Japanese Laid-Open Patent Publication No. 2013-49161 describes a technology in which a laser beam having a transmission wavelength to SiC irradiates with its focal point positioned inside a SiC ingot, a modified layer and cracks are formed on a predetermined dicing surface, and an external force is applied to slice a wafer along the predetermined dicing surface, thereby slicing the wafer from the ingot.

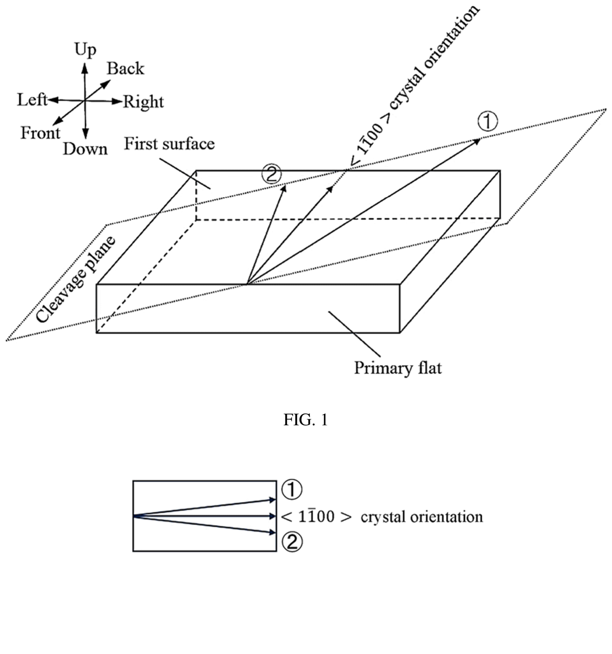

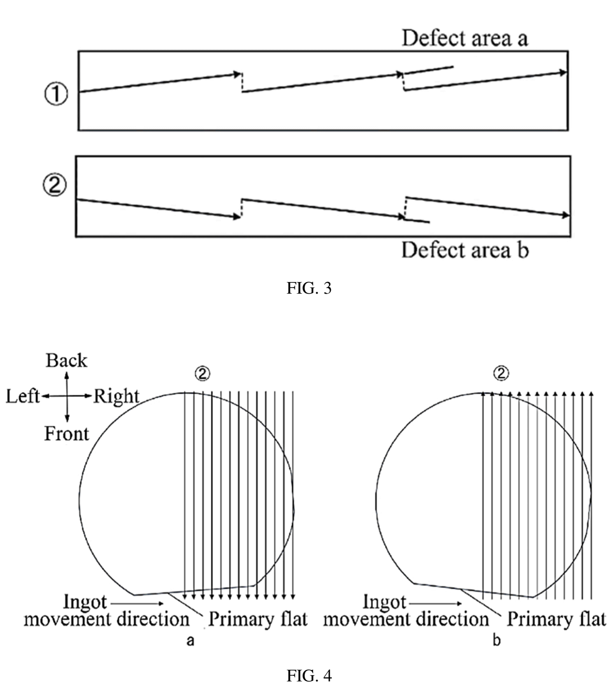

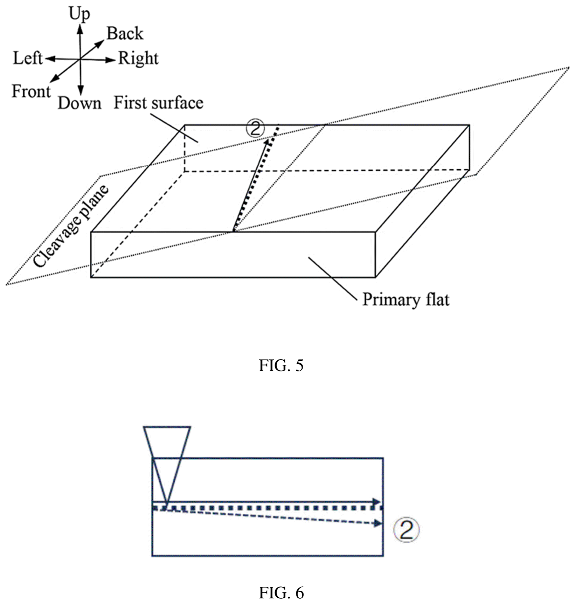

To clearly illustrate the technical solutions of the present disclosure, upper sides, lower sides, left sides, right sides, front sides, and back sides shown in FIGs. 1 and 5, and a left side, a right side, a front side, and a back side shown in FIG. 4 are defined.

As shown in FIG. 1, there is an included angle (e.g., 4°) between a cleavage plane of SiC and a crystal surface in this method. An intersection line of the two is a < 1100 > crystal orientation. Ideally, when a laser scans along the < 1100 > crystal orientation, a depth of a modified layer remains most stable. However, in actual processing, since it is difficult to identify a position of the < 1100 > crystal orientation, laser scanning path typically follows path ① or path ②. FIG. 2 shows a right-side schematic view of a longitudinal cross-section inside a SiC crystal for the path ①, the path ②, and the < 1100 > crystal orientation. As shown in FIG. 3, when the laser scans along the path ①, cracks gradually extend upward along the cleavage plane, but do not extend indefinitely; after a certain height is reached, heights of the cracks will fall back because a laser energy density drops below a modification threshold; and due to uneven doping concentrations in different parts of an ingot, a localized upward-extending defect area a may form. The defects are located on a side of a wafer after slicing, which may cause the wafer to be unqualified due to residual defects even after being ground to a specified thickness.

The applicant found that if the laser scans along the path ② as shown in FIG. 3, the cracks gradually extend downward along the cleavage plane, but do not extend indefinitely; after a certain depth is reached, the heights of the cracks will rebound because the laser energy density drops below the modification threshold; and due to uneven doping concentrations in different parts of the ingot, a localized downward-extending defect area b may form. The defects are located on a side of the ingot after slicing, which may lead to an increase in a grinding amount of the ingot. Compared with wafer disqualification, an increase in the grinding amount of the ingot has a lesser impact. Additionally, since a material's light absorption increases with depth, the defect area a exhibits greater upward extension, whereas the defect area b shows less downward extension.

### SUMMARY

To solve the above technical problems, an object of the present disclosure is to provide a method for generating wafers by laser slicing of SiC ingots. This method improves formation of modified layers and propagation paths of cracks, reduces residual wafer defects, and enhances production yield by adjusting a rotation angle of a SiC ingot and an incident angle of a laser beam so that a scanning direction of the laser beam deviates from a primary flat within a specific angular range.

To achieve the above object, the present disclosure adopts the following technical solutions:
A method for generating wafers by laser slicing of SiC ingots, including following steps:
1) forming a modified layer parallel to a first surface of a SiC ingot from the first surface, where the modified layer is formed by irradiating the ingot with a laser beam for modification and positioning a focal point of the laser beam for modification at a depth from the first surface corresponding to a thickness of a wafer to be produced; and
2) after the modified layer is formed, extending cracks from the modified layer to a cleavage plane of the SiC ingot so as to slice the SiC wafer from the ingot along the cracks;
   where the SiC ingot has a primary flat originally perpendicular to a scanning direction of the laser beam for modification, and a rotation angle of the SiC ingot and the scanning direction of the laser beam for modification are adjusted; when the laser beam for modification scans from back to front, the scanning direction of the laser beam for modification is clockwise deviated relative to the primary flat by an angle ranging from 1° to 15°; and when the laser beam for modification scans from front to back, the scanning direction of the laser beam for modification is counterclockwise deviated relative to the primary flat by an angle ranging from 1° to 15°.

Preferably, the method includes following steps:
1) forming a base layer parallel to the first surface of the SiC ingot from the first surface, where the base layer is formed by irradiating the ingot with a laser beam for base forming having a first power and positioning a focal point of the laser beam for base forming at a first depth from the first surface corresponding to the thickness of the wafer to be produced;
2) after the base layer is formed, corresponding to a position of the base layer, further positioning the focal point of the laser beam for modification at a deeper second depth of the ingot using the laser beam for modification, and forming a modified layer at the first depth; where the rotation angle of the SiC ingot and the scanning direction of the laser beam for modification are adjusted; when the laser beam for modification scans from back to front, the scanning direction of the laser beam for modification is clockwise deviated relative to the primary flat by an angle ranging from 1° to 15°; and when the laser beam for modification scans from front to back, the scanning direction of the laser beam for modification is counterclockwise deviated relative to the primary flat by an angle ranging from 1° to 15°; and
3) after the modified layer is formed, extending cracks from the modified layer to the cleavage plane of the SiC ingot so as to slice the SiC wafer from the ingot along the cracks.

In the above technical solution, a low-energy laser beam for base forming is used to pre-process the base layer (black dotted line in FIG. 6) inside the ingot, and by controlling parameters such as energy, a spot spacing, and a pulse width, a consistent base depth can be ensured. Then, a laser beam for modification with a second power greater than the first power perform modified layer processing again along the path ②, and the base layer prevents the laser-modified layer from continuing to propagate downward along the cleavage plane, ultimately making a depth of a slicing layer more stable.

Preferably, the base layer can be processed using a multi-spot laser to increase a base width, which can more effectively prevent the laser-modified layer from extending further into the ingot.

Preferably, the deviation angle of the scanning direction of the laser beam for modification relative to the primary flat is in a range from 5° to 10°.

Preferably, a wavelength of the laser beam for base forming is transmissive to the SiC ingot.

Preferably, the laser beam for modification irradiates an area of the base layer to induce the formation of the modified layer through multiphoton absorption and cause the cracks to propagate along the cleavage plane.

Preferably, in the step of wafer slicing, an external force is applied to the SiC ingot to separate the wafer from the ingot at a separation starting point of the modified layer and the cracks.

Preferably, the laser beam for modification has a second power greater than the first power.

Preferably, control parameters of the laser beam for base forming are as follows:
Wavelength: 1,000~1,100 nm;
Pulse width: 0.0001~20 ns;
Focal spot diameter: 0.5∼3 µm; and
Numerical aperture (NA) of a focusing lens: 0.4~0.9.

More preferably, the control parameters of the laser beam for base forming are as follows:
Wavelength: 1,000~1,100 nm;
Repetition frequency: 90∼110 kHz;
Average power: 0.8∼1.2 W;
Pulse width: 0.0001~0.0005 ns;
Focal spot diameter: 1.5∼2 µm; and
NA of the focusing lens: 0.6∼0.7.

Preferably, control parameters of the laser beam for modification are as follows:
Wavelength: 1,000~1,100 nm;
Pulse width: 0.0001~20 ns;
Focal spot diameter: 0.5~10 µm; and
NA of a focusing lens: 0.4~0.9.

More preferably, the control parameters of the laser beam for modification are as follows:
Wavelength: 1,000~1,100 nm;
Repetition frequency: 90∼110 kHz;
Average power: 2.7~3.3 W;
Pulse width: 15~20 ns;
Focal spot diameter: 1.5~2 µm; and
NA of the focusing lens: 0.6∼0.7.

Further, the present disclosure also provides equipment for implementing the aforesaid method, where the equipment is configured to adjust a rotation angle of a SiC ingot and a scanning direction of a laser beam for modification; when the laser beam for modification scans from back to front, the scanning direction of the laser beam for modification is clockwise deviated relative to a primary flat by an angle ranging from 1° and 15°; and when the laser beam for modification scans from front to back, the scanning direction of the laser beam for modification is counterclockwise deviated relative to the primary flat by an angle ranging from 1 ° and 15°.

The present disclosure adopts the above technical solutions and has the following technical effects:

### 1. Improved quality of modified layer formation

By controlling the scanning direction of the laser beam for modification to have a specific deviation angle (ranging from 1° to 15°) relative to the primary flat of the SiC ingot, the formation of the modified layers can be effectively controlled. This control can reduce overlapping between the modified layers and ensure uniformity and consistency of the modified layers, thereby enhancing their quality. Such precise formation of the modified layers makes subsequent wafer slicing more controllable and effective.

### 2. Enhanced controllability of crack propagation

Adjusting the scanning direction and incident angle of the laser beam can control the propagation paths of cracks between the modified layers. By setting the deviation angle, the extension direction of the cracks can be optimized to propagate along the cleavage plane, which helps to form a clear and controllable slicing path in the SiC ingot, thereby achieving high-precision wafer slicing and reducing the risk of residual wafer defects and breakage caused by uneven crack propagation during the slicing process.

### 3. Increased wafer production efficiency and yield

By adopting a multi-step modified layer formation method and combining laser beams with different powers and parameters, the depth and position of each modified layer can be precisely controlled. This can effectively improve the efficiency of wafer slicing and reduce unnecessary processing steps. At the same time, by precisely controlling the formation of the modified layers and cracks, the generation of defects and imperfections can be reduced, and the production yield can be significantly increased. Such a high-efficiency and high-yield production method is particularly important in industrial manufacturing.

### 4. Reduced material waste and production costs

By optimizing the parameters (such as wavelength, pulse width, focal spot diameter, NA, etc.) and scanning direction of the laser beam, the present disclosure can significantly reduce material waste during the processing. The precise control of the modified layers and cracks allows for maximum utilization of raw materials when the wafer is sliced from the SiC ingot, reducing material waste caused by over-processing and misoperations. This improvement in material utilization directly reduces production costs and is of great significance for large-scale industrial applications.

### 5. Promoted processing quality of wafer surface

By controlling the scanning direction of the laser beam and other parameters of laser processing, microscopic defects on and inside the wafer, such as micro-cracks and surface roughness, can be reduced. The stabilized formation of modified layers and cracks can provide a smoother slicing surface, which is crucial for subsequent wafer processing (e.g., grinding, polishing) and applications (e.g., semiconductor device manufacturing).

In summary, the present disclosure achieves comprehensive optimization of the SiC wafer generation process from modified layer formation and crack propagation to wafer slicing through an innovative laser beam control method and modified layer formation strategy, significantly improving production efficiency, material utilization, and product quality and demonstrating broad industrial application prospects.

### BRIEF DESCRIPTION OF THE DRAWINGS

FIG. 1 is a principle diagram of path ① and path ② of the present disclosure.
FIG. 2 is a right-side view of path ① and path ② of the present disclosure.
FIG. 3 is a schematic diagram of modified layers formed by a laser beam for modification scanning along path ① and path ②.
FIG. 4 is a diagram of scanning directions of laser beams processed in Example 1 and Example 2 of the present disclosure.
FIGs. 5 and 6 are principle diagrams of processing in Example 2.

### DETAILED DESCRIPTION OF THE EMBODIMENTS

Hereinafter, the technical solutions in the examples of the present disclosure will be clearly and completely described in conjunction with these examples. Obviously, the described examples are only a part of the examples of the present disclosure, rather than all of them. All other examples obtained by those skilled in the art based on the examples in the present disclosure without creative efforts shall fall within the protection scope of the present disclosure.

### Example 1

### Step 1: Modified layer formation

A SiC ingot was fixed on a supporting table with its first surface facing upward and aligned with an incident path of a laser beam. The ingot was irradiated with a laser beam for modification (wavelength: 1,064 nm).

A focal point of the laser beam for modification was adjusted to be positioned at a depth of 390 µm from the first surface of the SiC ingot, which corresponded to a reference depth of a thickness of a wafer to be produced.

Control parameters of the laser beam for modification were set as follows: a pulse width of 20 ns, a focal spot diameter of 2 µm, a NA of 0.7, a repetition frequency of 100 kHz, and an average power of 3 W.

A rotation angle of the SiC ingot and a scanning direction of the laser beam for modification were adjusted. When the laser beam for modification scanned from back to front, the scanning direction of the laser beam for modification was clockwise deviated relative to a primary flat by 7°; when the laser beam for modification scanned from front to back, the scanning direction of the laser beam for modification was counterclockwise deviated relative to the primary flat by 7°, ensuring that the deviation angle remained within an optimized angular range. The ingot was scanned relative to the laser beam for modification from left to right at a feed rate of 60 mm/s, resulting in the formation of a uniform modified layer with cracks propagating along a cleavage plane on both sides.

### Step 2: Wafer slicing

After the modified layer and cracks were formed, an external force was applied by a mechanical device to extend the cracks along the cleavage plane, ultimately achieving the slicing of the SiC wafer from the ingot.

### Example 2

### Step 1: Base layer formation

A SiC ingot was fixed on a supporting table with its first surface facing upward and aligned with an incident path of a laser beam. The ingot was irradiated with a laser beam for base forming (wavelength: 1,064 nm) having a first power.

A focal point of the laser beam for base forming was adjusted to be positioned at a depth of 390 µm from the first surface of the SiC ingot, which corresponded to a reference depth of a thickness of a wafer to be produced.

Control parameters of the laser beam for base forming were set as follows: a pulse width of 0.0003 ns, a focal spot diameter of 2 µm, a NA of 0.7, a repetition frequency of 100 kHz, and an average power of 1 W.

The ingot was scanned relative to the laser beam for base forming from left to right at a feed rate of 60 mm/s, resulting in the formation of a uniform base layer.

### Step 2: Modified layer formation

After the base layer was formed, the SiC ingot was further processed using a laser beam for modification (wavelength: 1,064 nm) having a second power, where the power of the laser beam for modification was greater than that of the laser beam for base forming.

A focal point of the laser beam for modification was adjusted to a position 5 µm deeper than the position of the first depth, i.e., to a depth of 395 µm. This increased depth enlarged a spot size of the laser beam for modification at the first base layer, improving the crack propagation efficiency.

Control parameters of the laser beam for modification were set as follows: a pulse width of 20 ns, a focal spot diameter of 2 µm, a NA of 0.7, a repetition frequency of 100 kHz, and an average power of 3 W.

A rotation angle of the SiC ingot and a scanning direction of the laser beam for modification were adjusted. When the laser beam for modification scanned from back to front, the scanning direction of the laser beam for modification was clockwise deviated relative to a primary flat by 7°; when the laser beam for modification scanned from front to back, the scanning direction of the laser beam for modification was counterclockwise deviated relative to the primary flat by 7°, ensuring that the deviation angle remained within an optimized angular range. The ingot was scanned relative to the laser beam for modification from left to right at a feed rate of 60 mm/s, resulting in the formation of a modified layer at the same depth as the base layer, with cracks propagating along a cleavage plane on both sides.

### Step 3: Wafer slicing

After the modified layer and cracks were formed, an external force was applied by a mechanical device to extend the cracks along the cleavage plane, ultimately achieving the slicing of the SiC wafer from the ingot.

### Comparative Example 1

Processing was performed following a scanning direction of a laser beam along the path ① as described in the background art, and other technical features were as shown in Example 1.

### Comparative Example 2

Processing was performed following a scanning direction of a laser beam along the < 1100 > crystal orientation as described in the background art, and other technical features were as shown in Example 1.

In the technical solutions of the examples and comparative examples, the laser processing depths for all ingots were identical, ensuring that the theoretical focal depths of the laser beams inside the ingots were identical.

In the technical solutions of the examples and comparative examples, all wafers were ground and polished to a target thickness of 350 µm, and a microscope was used to check for any residual processing defects, such as laser marks or cracks inside the wafers.

In the technical solutions of the examples and comparative examples, if any wafer still retained processing defects after being ground and polished to the target thickness of 350 µm, no further grinding or polishing was performed, and the wafer was recorded as unqualified in the number of defect-retaining wafers.

In the technical solutions of the examples and comparative examples, all ingots after slicing underwent grinding and polishing until processing defects such as laser marks and cracks were removed, and the material loss of the ingot at this stage was recorded as the grinding and polishing loss at the defect-free state.

In the technical solutions of the examples and comparative examples, total removal = grinding and polishing loss at the defect-free state - target thickness after wafer grinding and polishing.

In the technical solutions of the examples and comparative examples, yield = 1 - (number of defect-retaining wafers ÷ number of processed wafers).

The processing performance data were shown in Table 1.

**Table 1: Processing Performance Data**

| | Comparative Example 1 | Comparative Example 2 | Example 1 | Example 2 |
|---|---|---|---|---|
| Processing depth (µm) | 390 | 390 | 390 | 390 |
| Target thickness after wafer grinding and polishing (µm) | 350 | 350 | 350 | 350 |
| Number of processed wafers | 25 | 19 | 20 | 25 |
| Number of defect-retaining wafers | 7 | 3 | 0 | 0 |
| Grinding and polishing loss at the defect-free state (µm) | 432 ± 4 | 436 ± 4 | 450 ± 5 | 441 ± 5 |
| Total removal (µm) | 82 ± 4 | 86 ± 4 | 100 ± 5 | 91 ± 5 |
| Yield | 72% | 84.2% | 100% | 100% |

The above is the description of the examples of the present disclosure. Through the above description of the disclosed examples, those skilled in the art can implement or use the present disclosure, and various modifications to these examples will be apparent to those skilled in the art. The general principles defined herein can be implemented in other examples without departing from the spirit or scope of the present disclosure. Therefore, the present disclosure will not be limited to the example shown herein, but shall conform to the broadest scope consistent with the principles and novel features disclosed herein.

## Claims

1. A method for generating wafers by laser slicing of SiC ingots, comprising following steps:
1) forming a modified layer parallel to a first surface of a SiC ingot from the first surface, wherein the modified layer is formed by irradiating the ingot with a laser beam for modification and positioning a focal point of the laser beam for modification at a depth from the first surface corresponding to a thickness of a wafer to be produced; and
2) after the modified layer is formed, extending cracks from the modified layer to a cleavage plane of the SiC ingot so as to slice the SiC wafer from the ingot along the cracks;
wherein the SiC ingot has a primary flat originally perpendicular to a scanning direction of the laser beam for modification, and a rotation angle of the SiC ingot and the scanning direction of the laser beam for modification are adjusted; when the laser beam for modification scans from back to front, the scanning direction of the laser beam for modification is clockwise deviated relative to the primary flat by an angle ranging from 1° to 15°; when the laser beam for modification scans from front to back, the scanning direction of the laser beam for modification is counterclockwise deviated relative to the primary flat by an angle ranging from 1° to 15°; and the laser scans along a path with an offset from a < 1100 > crystal orientation, so that the cracks gradually extend toward the ingot along the cleavage plane.

2. The method according to claim 1, wherein the method comprises following steps:
1) forming a base layer parallel to the first surface of the SiC ingot from the first surface, wherein the base layer is formed by irradiating the ingot with a laser beam for base forming having a first power and positioning a focal point of the laser beam for base forming at a first depth from the first surface corresponding to the thickness of the wafer to be produced;
2) after the base layer is formed, corresponding to a position of the base layer, further positioning the focal point of the laser beam for modification at a deeper second depth of the ingot using the laser beam for modification, and forming a modified layer at the first depth; wherein the rotation angle of the SiC ingot and the scanning direction of the laser beam for modification are adjusted; when the laser beam for modification scans from back to front, the scanning direction of the laser beam for modification is clockwise deviated relative to the primary flat by an angle ranging from 1° to 15°; and when the laser beam for modification scans from front to back, the scanning direction of the laser beam for modification is counterclockwise deviated relative to the primary flat by an angle ranging from 1° to 15°; and
3) after the modified layer is formed, extending cracks from the modified layer to the cleavage plane of the SiC ingot so as to slice the SiC wafer from the ingot along the cracks.

3. The method according to claim 1 or 2, wherein the deviation angle of the scanning direction of the laser beam for modification relative to the primary flat is in a range from 5° to 10°.

4. The method according to claim 2, wherein a wavelength of the laser beam for base forming is transmissive to the SiC ingot.

5. The method according to claim 2, wherein the laser beam for modification irradiates an area of the base layer to induce the formation of the modified layer through multiphoton absorption and cause the cracks to propagate along the cleavage plane.

6. The method according to claim 2, wherein in the step of wafer slicing, an external force is applied to the SiC ingot to separate the wafer from the ingot at a separation starting point of the modified layer and the cracks.

7. The method according to claim 2, wherein the laser beam for modification has a second power greater than the first power.

8. The method according to claim 2, wherein control parameters of the laser beam for base forming are as follows:
Wavelength: 1,000~1,100 nm;
Repetition frequency: 90∼110 kHz;
Average power: 0.8~1.2 W;
Pulse width: 0.0001~0.0005 ns;
Focal spot diameter: 1.5~2 µm; and
Numerical aperture (NA) of a focusing lens: 0.6~0.7.

9. The method according to claim 2, wherein control parameters of the laser beam for modification are as follows:
Wavelength: 1,000~1,100 nm;
Repetition frequency: 90∼110 kHz;
Average power: 2.7~3.3 W;
Pulse width: 15~20 ns;
Focal spot diameter: 1.5~2µm; and
NA of a focusing lens: 0.6∼0.7.

10. Equipment for implementing the method according to any one of claims 1 to 9, wherein the equipment is configured to adjust a rotation angle of a SiC ingot and a scanning direction of a laser beam for modification; when the laser beam for modification scans from back to front, the scanning direction of the laser beam for modification is clockwise deviated relative to a primary flat by an angle ranging from 1° and 15°; and when the laser beam for modification scans from front to back, the scanning direction of the laser beam for modification is counterclockwise deviated relative to the primary flat by an angle ranging from 1° and 15°.
